# EUROPEAN PATENT APPLICATION

(11) **EP 4 657 307 A1**
(43) Date of publication of application: **03.12.2025**
(21) Application number: 24795788.9
(22) Date of filing: 03.04.2024
(51) Int. Cl.: G06F 40/30

(54) **SEMANTIC INFORMATION TRANSMISSION METHOD AND COMMUNICATION APPARATUS**

(30) Priority: 27.04.2023 CN 202310478426
(71) Applicant: Huawei Technologies Co., Ltd., Shenzhen, Guangdong 518129 (CN)
(72) Inventor: CHEN, Weichao, Shenzhen, Guangdong 518129 (CN); XU, Hao, Shenzhen, Guangdong 518129 (CN); QIN, Yi, Shenzhen, Guangdong 518129 (CN); ZENG, Qinghai, Shenzhen, Guangdong 518129 (CN); NIU, Xueyan, Shenzhen, Guangdong 518129 (CN); FU, Yu, Shenzhen, Guangdong 518129 (CN); PANG, Xu, Shenzhen, Guangdong 518129 (CN)
(74) Representative: MERH-IP Matias Erny Reichl Hoffmann Patentanwälte PartG mbB
(86) International application number: PCT/CN2024/085712
(87) International publication number: WO 2024/222407

(57) **Abstract**

A semantic information transmission method and a communication apparatus are provided. A semantic library is stored in a network element in a core network or an access network, and any device (for example, a terminal device or a server) accessing the core network or the access network can obtain the semantic library from the network element. In this way, the semantic library is public. This improves efficiency of obtaining the semantic library by users, and is user-friendly. In addition, the network element may assist the terminal device or the server in performing processes such as semantic information extraction, semantic encoding, and channel encoding, or channel decoding, semantic decoding, and semantic recovery, thereby improving efficiency of performing a semantic processing process by the terminal device or the server. According to the foregoing technical solutions, a transmitter device in semantic communication can obtain bitstreams containing highly-compressed transmission content and bit error resilience for channel conditions, and a receiver device in the semantic communication can efficiently decode the received bitstream, thereby improving efficiency of the semantic communication.

## Description

This application claims priority to Chinese Patent Application No. 202310478426.7, filed with the China National Intellectual Property Administration on April 27, 2023 and entitled "SEMANTIC INFORMATION TRANSMISSION METHOD AND COMMUNICATION APPARATUS", which is incorporated herein by reference in its entirety.

### TECHNICAL FIELD

This application relates to the communication field, and more specifically, to a semantic information transmission method and a communication apparatus.

### BACKGROUND

Semantic communication (such as scenarios like video conferencing and remote surveillance) is a technology that semantically represents and transmits information. Semantic communication addresses the expression and transmission of information's meaning at a semantic level, partially or entirely pre-processing comprehension of information's meaning at a transmitting end, thereby reducing a transmission amount and reducing bandwidth requirements.

Typically, a semantic communication process involves: First, a transmitter device (for example, a terminal device) extracts semantic information from input data (for example, video data and voice data), then performs semantic encoding on extracted semantic information to generate a semantic encoding sequence, and then performs channel encoding on the semantic encoding sequence. After being transmitted over wireless channels, data streams (data stream) obtained through channel encoding arrives at a receiver device (for example, another terminal device). The receiver device first performs channel decoding, then performs semantic decoding, and then performs semantic information recovery based on a semantic decoding result. The processing processes such as the semantic information extraction and the semantic encoding performed by the transmitter device and the semantic decoding and the semantic information recovery performed by the receiver device need a semantic library (Semantic library) to extract and reconstruct the semantic information, where the library is trained based on massive data.

However, in related technologies, the semantic library is constructed solely by application service providers, making it private. Terminal devices can use the semantic library only when using applications provided by the application service providers, which is not user-friendly. In addition, due to insufficient computing resources or insufficient storage capabilities of terminal devices, it is difficult to implement efficient and high-precision semantic extraction and recovery processes, lowering efficiency of semantic communication.

### SUMMARY

This application provides a semantic information transmission method and a communication apparatus. A semantic library is stored in a network element in a core network or an access network, and any device (for example, a terminal device or a server) accessing the core network or the access network can obtain the semantic library from the network element, making the semantic library public. This improves efficiency of obtaining the semantic library by the terminal device, is user-friendly, and thus improves efficiency of semantic communication.

According to a first aspect, a semantic information transmission method is provided. The method includes: A first network element sends data in a first semantic library to a first device, where the first network element is deployed on a core network side or an access network side, the first network element stores one or more semantic libraries, and the data in the first semantic library includes at least one of a semantic source encoding model, a channel encoding model, data or a model that is helpful to a source encoding model, or data or a model that is helpful to a channel encoding model; the first device performs first semantic processing on to-be-transmitted semantic data by using the data in the first semantic library, to obtain a semantic data stream; and the first device sends the semantic data stream to a second device.

According to the semantic information transmission method provided in the first aspect, the semantic library is stored in the first network element in a core network or an access network, and any device (for example, a terminal device or a server) accessing the core network or the access network can obtain the semantic library from the first network element. In this way, the semantic library is public. This improves efficiency of obtaining the semantic library by the terminal device, and is user-friendly, thereby improving efficiency of semantic communication.

For example, the first network element may be an RPF. It is clear that, the first network element may alternatively be another network element or have another name. Alternatively, a function of the first network element may be integrated into an existing core network element. Alternatively, a function of the first network element may be integrated into an existing radio access network device.

For example, the first device includes at least one of a terminal device or a server.

In a possible implementation of the first aspect, before the first device sends the semantic data stream to the second device, the method further includes: The first device sends first indication information to the first network element, where the first indication information indicates the first network element to assist in performing the first semantic processing, and the first indication information includes at least one of the to-be-transmitted semantic data, a task cooperation instruction, or a task requirement; the first network element assists in, based on the first indication information, performing the first semantic processing, and sends a processing result to the first device; and the first device obtains the semantic data stream based on the processing result and a processing result of performing the first semantic processing by the first device. In this implementation, the first network element assists in performing the semantic processing, and feeds back the processing result to the receiver device, so that efficiency of performing semantic information processing by the receiver device is improved, and a requirement on a processing capability of the terminal device is reduced.

In a possible implementation of the first aspect, the method further includes: The first network element determines data in a second semantic library corresponding to the first semantic library, where the data in the second semantic library includes at least one of a semantic source decoding model, a channel decoding model, data or a model that is helpful to a source decoding model, data or a model that is helpful to a channel decoding model, or the like; the first network element sends the data in the second semantic library to the second device; and the second device performs second semantic processing on the received semantic data stream by using the data in the second semantic library, to obtain the to-be-transmitted semantic data, where the second semantic processing includes: performing channel decoding, semantic information decoding, and semantic recovery on the semantic data stream by using the data in the second semantic library. In this implementation, the first network element may determine the data in the second semantic library corresponding to the first semantic library, and send the data to the second device. This improves efficiency of obtaining the semantic library by the second device, and is user-friendly. Based on the semantic library provided by the first network element, the semantic processing can be implemented when a computing resource, a storage resource, or the like of the second device is limited, thereby improving efficiency of performing channel decoding, and semantic information decoding and recovery by the second device, and reducing requirements on a processing capability of the second device. In addition, it is ensured that the first network element can determine correct and available semantic library data, thereby ensuring precision and validity of the data in the semantic library.

For example, the second device includes at least one of a terminal device or a server.

In a possible implementation of the first aspect, the method further includes: The second device sends second indication information to the first network element, where the second indication information indicates the first network element to assist in performing the second semantic processing, and the second indication information includes at least one of the received semantic data stream, a task cooperation instruction, or a task requirement; the first network element assists in, based on the second indication information, performing the second semantic processing, and sends a processing result to the second device; and the second device obtains the to-be-transmitted semantic data based on the processing result and a processing result of performing the second semantic processing by the second device. In this implementation, the first network element may assist the second device in performing the semantic processing (for example, including channel decoding, semantic decoding, and semantic information recovery), to improve efficiency of performing a semantic processing process by the second device, and reduce a requirement on a processing capability of the second device.

In a possible implementation of the first aspect, before the first network element sends the data in the first semantic library to the first device, the method further includes: The first device sends a semantic resource request to a second network element, where the semantic resource request is used to request a semantic library resource, and the semantic resource request may include: at least one of a type of the to-be-transmitted semantic data, a required resource, or a semantic library request t; the second network element sends third indication information to the first network element based on the semantic resource request, where the third indication information indicates the first network element to send the data in the first semantic library to the first device, the third indication information includes at least one of a task flow ID or an ID of the first semantic library, and the task flow ID or the ID of the first semantic library is determined based on the type of the to-be-transmitted semantic data; and the first network element determines the data in the first semantic library based on the third indication information. In this implementation, it can be ensured that the first network element sends the data in the first semantic library to the first device, and a terminal device or a server can obtain the semantic library from the first network element. In this way, the semantic library is public. This improves efficiency of obtaining the semantic library by the terminal device or the server, and is user-friendly.

For example, the second network element includes an AMF. It is clear that, the second network element may alternatively be another core network element.

In a possible implementation of the first aspect, the method further includes: The first network element sends information about the first semantic library to a third network element, where the first device and the first network element belong to a same network, the second device and the third network element belong to a same network, the first network element and the third network element are in different networks, the third network element is deployed on a core network side or an access network side, the third network element stores one or more semantic libraries, and the information about the first semantic library includes at least one of an ID of the first semantic library, a task flow ID, or a semantic source encoding model, a channel encoding model, or a data model that is used by the first device; the third network element determines, based on the information about the first semantic library, data in a second semantic library corresponding to the first semantic library, where the data in the second semantic library includes at least one of a semantic source decoding model, a channel decoding model, data or a model that is helpful to a source decoding model, data or a model that is helpful to a channel decoding model, or the like; the third network element sends the data in the second semantic library to the second device; and the second device performs second semantic processing on the received semantic data stream by using the data in the second semantic library, to obtain the to-be-transmitted semantic data. In this implementation, the information about the first semantic library is sent to the third network element, for the third network element and the first network element to perform semantic library alignment. In this way, the third network element can determine the data in the second semantic library corresponding to the first semantic library and send the data to the second device. This ensures that the third network element can determine correct and available semantic library data, thereby ensuring precision and validity of the data in the semantic library.

For example, the third network element may be an RPF. It is clear that, the third network element may alternatively be another network element or have another name. Alternatively, a function of the third network element may be integrated into an existing core network element. Alternatively, a function of the third network element may be integrated into an existing radio access network device.

In a possible implementation of the first aspect, the first semantic processing includes: performing semantic information extraction, semantic encoding, and channel encoding on the to-be-transmitted semantic data by using the data in the first semantic library.

In a possible implementation of the first aspect, the second semantic processing includes: performing channel decoding, semantic information decoding, and semantic recovery on the received semantic data stream by using the data in the second semantic library.

According to a second aspect, a semantic information transmission method is provided. An execution body of the method may be a first network element, or may be a chip, a chip system, or a processor that supports the first network element in implementing the method, or may be a logical node, a logical module, software, or the like that can implement all or some functions of the first network element. The method includes: A first network element receives third indication information, where the third indication information indicates the first network element to send data in a first semantic library to a first device, the third indication information includes at least one of a task flow ID or an ID of the first semantic library, the first network element is deployed on a core network side or an access network side, and the first network element stores one or more semantic libraries; the first network element determines the data in the first semantic library based on the third indication information, where the data in the first semantic library includes at least one of a semantic source encoding model, a channel encoding model, data or a model that is helpful to a source encoding model, or data or a model that is helpful to a channel encoding model; and the first network element sends the data in the first semantic library to the first device.

According to the semantic information transmission method provided in the second aspect, the semantic library is stored in the first network element in a core network or an access network, and any device (for example, a terminal device or a server) accessing the core network or the access network can obtain the semantic library from the first network element. In this way, the semantic library is public. This improves efficiency of obtaining the semantic library by the terminal device, and is user-friendly, thereby improving efficiency of semantic communication.

For example, the first network element may be an RPF. It is clear that, the first network element may alternatively be another network element or have another name. Alternatively, a function of the first network element may be integrated into an existing core network element. Alternatively, a function of the first network element may be integrated into an existing radio access network device.

For example, the first device includes at least one of a terminal device or a server.

In a possible implementation of the second aspect, the method further includes: The first network element receives first indication information from the first device, where the first indication information indicates the first network element to assist in performing first semantic processing, and the first indication information includes at least one of to-be-transmitted semantic data, a task cooperation instruction, or a task requirement; and the first network element assists in, based on the first indication information, performing the first semantic processing, and sends a processing result to the first device. In this implementation, the first network element assists in performing the semantic processing, and feeds back the processing result to the receiver device, so that efficiency of performing semantic information processing by the receiver device is improved, and a requirement on a processing capability of the terminal device is reduced.

In a possible implementation of the second aspect, the method further includes: The first network element determines data in a second semantic library corresponding to the first semantic library, where the data in the second semantic library includes at least one of a semantic source decoding model, a channel decoding model, data or a model that is helpful to a source decoding model, data or a model that is helpful to a channel decoding model, or the like; and the first network element sends the data in the second semantic library to a second device. In this implementation, the first network element may determine the data in the second semantic library corresponding to the first semantic library, and send the data to the second device. This improves efficiency of obtaining the semantic library by the second device, and is user-friendly. Based on the semantic library provided by the first network element, the semantic processing can be implemented when a computing resource, a storage resource, or the like of the second device is limited, thereby improving efficiency of performing channel decoding, and semantic information decoding and recovery by the second device, and reducing requirements on a processing capability of the second device. In addition, it is ensured that the first network element can determine correct and available semantic library data, thereby ensuring precision and validity of the data in the semantic library.

In a possible implementation of the second aspect, the method further includes: The first network element receives second indication information from the second device, where the second indication information indicates the first network element to assist in performing second semantic processing, and the second indication information includes at least one of a received semantic data stream, a task cooperation instruction, or a task requirement; and the first network element assists in, based on the second indication information, performing the second semantic processing, and sends a processing result to the second device. In this implementation, the first network element may assist the second device in performing the semantic processing (for example, including channel decoding, semantic decoding, and semantic information recovery), to improve efficiency of performing a semantic processing process by the second device, and reduce a requirement on a processing capability of the second device.

In a possible implementation of the second aspect, the method further includes: The first network element sends information about the first semantic library to a third network element, where the first device and the first network element belong to a same network, a second device and the third network element belong to a same network, the first network element and the third network element are in different networks, the third network element is deployed on a core network side or an access network side, the third network element stores one or more semantic libraries, and the information about the first semantic library includes at least one of the ID of the first semantic library, the task flow ID, or a semantic source encoding model, a channel encoding model, or a data model that is used by the first device. The information about the first semantic library is sent to the third network element, for the third network element and the first network element to perform semantic library alignment. In this way, the third network element can determine the data in the second semantic library corresponding to the first semantic library and send the data to the second device. This ensures that the third network element can determine correct and available semantic library data, thereby ensuring precision and validity of the data in the semantic library.

For example, the third network element may be an RPF. It is clear that, the third network element may alternatively be another network element or have another name. Alternatively, a function of the third network element may be integrated into an existing core network element. Alternatively, a function of the third network element may be integrated into an existing radio access network device.

In a possible implementation of the second aspect, the first semantic processing includes: performing semantic information extraction, semantic encoding, and channel encoding on the to-be-transmitted semantic data by using the data in the first semantic library.

In a possible implementation of the second aspect, the second semantic processing includes: performing channel decoding, semantic information decoding, and semantic recovery on the received semantic data stream by using the data in the second semantic library.

According to a third aspect, a communication apparatus is provided. The communication apparatus includes units configured to perform the steps in any one of the second aspect or the possible implementations of the second aspect. For example, the communication apparatus includes a processing module and an interface module (where the interface module may also be referred to as a communication module or the like). The interface module is configured to perform specific signal receiving and sending under driving of the processing module.

According to a fourth aspect, a communication apparatus is provided. The apparatus includes at least one processor and a memory, and the at least one processor is configured to perform the method in any one of the second aspect or the possible implementations of the second aspect. For example, the communication apparatus may be an RPF, and the communication apparatus is deployed on a core network side or an access network side. It is clear that, a function of the communication apparatus may alternatively be integrated into an existing core network element. Alternatively, a function of the communication apparatus may be integrated into an existing radio access network device.

According to a fifth aspect, a communication apparatus is provided. The apparatus includes at least one processor and an interface circuit, and the at least one processor is configured to perform the method in any one of the second aspect or the possible implementations of the second aspect. The apparatus may be a terminal device, or may be a chip, a chip system, a processor, or the like in the terminal device.

According to a sixth aspect, a network element is provided. The network element includes the communication apparatus provided in the third aspect, or the network element includes the communication apparatus provided in the fourth aspect, or the network element includes the communication apparatus provided in the fifth aspect.

According to a seventh aspect, a computer program product is provided. The computer program product includes a computer program. When executed by a processor, the computer program is configured to perform the method in any one of the first aspect or the possible implementations of the first aspect, or the method in any one of the second aspect or the possible implementations of the second aspect.

According to an eighth aspect, a computer-readable storage medium is provided. The computer-readable storage medium stores a computer program. When executed, the computer program is configured to perform the method in any one of the first aspect or the possible implementations of the first aspect, or the method in any one of the second aspect or the possible implementations of the second aspect.

According to a ninth aspect, a communication system is provided. The communication system includes the foregoing first network element, terminal device, server, and core network element.

According to a tenth aspect, a chip is provided. The chip includes a processor configured to invoke a computer program from a memory and run the computer program, so that a communication device in which the chip is installed performs the method in any one of the first aspect or the possible implementations of the first aspect, or the method in any one of the second aspect or the possible implementations of the second aspect.

### BRIEF DESCRIPTION OF DRAWINGS

FIG. 1 is a diagram of an architecture of a semantic communication system using a joint source-channel encoding/decoding model based on AI;
FIG. 2 is a diagram of a communication system applicable to a semantic information transmission method in an embodiment of this application according to an embodiment of this application;
FIG. 3 is a diagram of another communication system applicable to a semantic information transmission method in an embodiment of this application according to an embodiment of this application;
FIG. 4 is a schematic flowchart of a semantic information transmission method according to an embodiment of this application;
FIG. 5 is a schematic flowchart of another semantic information transmission method according to an embodiment of this application;
FIG. 6 is a schematic flowchart of still another semantic information transmission method according to an embodiment of this application;
FIG. 7 is a block diagram of another communication apparatus according to an embodiment of this application;
FIG. 8 is a block diagram of a communication apparatus according to an embodiment of this application; and
FIG. 9 is a block diagram of a chip system according to an embodiment of this application.

### DESCRIPTION OF EMBODIMENTS

The following describes technical solutions of this application with reference to accompanying drawings.

In descriptions of embodiments of this application, unless otherwise specified, "/" means "or". For example, A/B may indicate A or B. In this specification, "and/or" describes only an association relationship between associated objects and indicates that three relationships may exist. For example, A and/or B may indicate the following three cases: Only A exists, both A and B exist, and only B exists. In addition, in the descriptions in embodiments of this application, "a plurality of" means two or more.

The terms "first" and "second" mentioned below are merely intended for a purpose of description, and shall not be understood as an indication or implication of relative importance or implicit indication of the number of indicated technical features. Therefore, a feature limited by "first" or "second" may explicitly or implicitly include one or more features. In the descriptions of embodiments, unless otherwise specified, "a plurality of" means two or more.

In embodiments of this application, each network element (for example, including a terminal device, a network device, or a core network element) includes a hardware layer, an operating system layer running above the hardware layer, and an application layer running above the operating system layer. The hardware layer includes hardware such as a central processing unit (central processing unit, CPU), a memory management unit (memory management unit, MMU), and a memory (also referred to as a main memory). The operating system may be any one or more types of computer operating systems that implement service processing through a process (process), for example, a Linux operating system, a Unix operating system, an Android operating system, an iOS operating system, or a Windows operating system. The application layer includes applications such as a browser, an address book, word processing software, and instant messaging software. In addition, a specific structure of an execution body of a method provided in embodiments of this application is not specifically limited in embodiments of this application, provided that communication can be performed according to the method provided in embodiments of this application by running a program that records code of the method provided in embodiments of this application. For example, the execution body of the method provided in embodiments of this application may be a terminal device or a network device, or may be a functional module that is in the terminal device or the network device and that can invoke a program and execute the program.

In addition, aspects or features of this application may be implemented as a method, an apparatus, or a product that uses standard programming and/or engineering technologies. The term "product" used in this application covers a computer program that can be accessed from any computer-readable component, carrier, or medium. For example, the computer-readable medium may include but is not limited to: a magnetic storage component (for example, a hard disk, a floppy disk or a magnetic tape), an optical disc (for example, a compact disc (compact disc, CD) or a digital versatile disc (digital versatile disc, DVD)), a smart card and a flash memory component (for example, an erasable programmable read-only memory (erasable programmable read-only memory, EPROM), a card, a stick, or a key drive). In addition, various storage media described in this specification may represent one or more devices and/or other machine-readable media that are configured to store information. The term "machine-readable media" may include but is not limited to a wireless channel, and various other media that can store, contain and/or carry instructions and/or data.

Semantic communication (such as scenarios like video conferencing and remote surveillance) is a technology that semantically represents and transmits information. Semantic communication addresses the expression and transmission of information's meaning at a semantic level, partially or entirely pre-processing comprehension of information's meaning at a transmitting end, thereby reducing a transmission amount and reducing bandwidth requirements. Semantic communication may be widely applied in future 6G and metaverse eras, such as extended reality (extended reality, XR) and cloud gaming (cloud gaming, CG). Currently, semantic communication research focuses on how to introduce an excellent learning model in the machine learning field to accelerate semantic information extraction (semantic extraction) and recovery, for example, how to improve training of a general-purpose transformer (Transformer) model, a first-order motion model neural network, a generative adversarial network based on a fast gradient method, a convolutional neural network, and a joint source-channel encoding/decoding model to accelerate semantic information extraction and recovery. In terms of industrial applications, real-time video transmission has been implemented in joint semantic source-channel transmission currently. Especially, a session video semantic transmission solution oriented to face scenarios has been applied to the China Mobile Safe Village network.

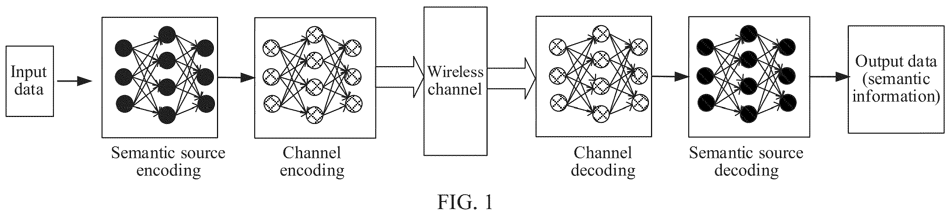

Currently, there is an artificial intelligence (artificial intelligence, AI)-based joint source-channel encoding/decoding model. For example, FIG. 1 shows an architecture of a semantic communication system using the AI-based joint source-channel encoding/decoding model. Input data (for example, video data or voice data) sequentially passes through a semantic source encoder and a joint channel encoder of a transmitter device, and a semantic library is used to extract semantic information related to receiver tasks. The semantic information may be source signal recovery or intelligent task execution. After being transmitted through a wireless channel, a channel encoded data stream arrives at a channel encoder and a joint semantic source decoder of a receiver device, and the receiver device uses a semantic library to perform semantic information recovery (that is, to obtain output data). Such a joint source-channel encoding/decoding architecture based on an AI neural network is different from a conventional separation method. When channel quality is lower than a threshold, performance thereof does not crash. Similar to an AI-assisted data compression solution, the AI-assisted joint source-channel encoding/decoding solution also has flexibility to adapt to specific distortion or channel distribution.

In embodiments of this application, a semantic library includes a semantic source encoding/decoding model and a channel encoding/decoding model. It is clear that, the semantic library may further include data, a model, or the like that is helpful to the encoding/decoding model. This is not limited in embodiments of this application.

However, in related technologies, a semantic library is constructed unilaterally by an application service provider, and the semantic library is private. A terminal device can use the semantic library only when using an application provided by the application service provider. This reduces efficiency of obtaining the semantic library by the terminal device, and is not user-friendly. In addition, due to insufficient computing capabilities of the terminal device, it is difficult to implement efficient and high-precision semantic extraction and recovery processes. In addition, due to a limited storage capacity of the terminal device, it is difficult to store the entire semantic library. Consequently, efficiency of performing semantic information extraction and semantic encoding, and semantic decoding and semantic information recovery by the terminal device by using the semantic library is low.

In view of this, this application provides a semantic information transmission method. A semantic library is stored in a network element (which, for example, may also be referred to as a first network element) in a core network or an access network, and any device (for example, a terminal device or a server) accessing the core network or the access network can obtain the semantic library from the network element. In this way, the semantic library is public. This improves efficiency of obtaining the semantic library by the terminal device, and is user-friendly. In addition, the network element may assist the terminal device or the server in performing processes such as semantic information extraction and semantic encoding, or semantic decoding and semantic recovery, thereby improving efficiency of performing semantic processing (for example, including semantic information extraction, semantic encoding, and channel encoding, or channel decoding, semantic decoding, and semantic information recovery) processes by the terminal device or the server. According to the foregoing technical solutions, a transmitter device in semantic communication can obtain a bitstream having highly-compressed transmission content and bit error resilience for channel conditions, and a receiver device in the semantic communication can efficiently decode the received bitstream, thereby improving efficiency of the semantic communication.

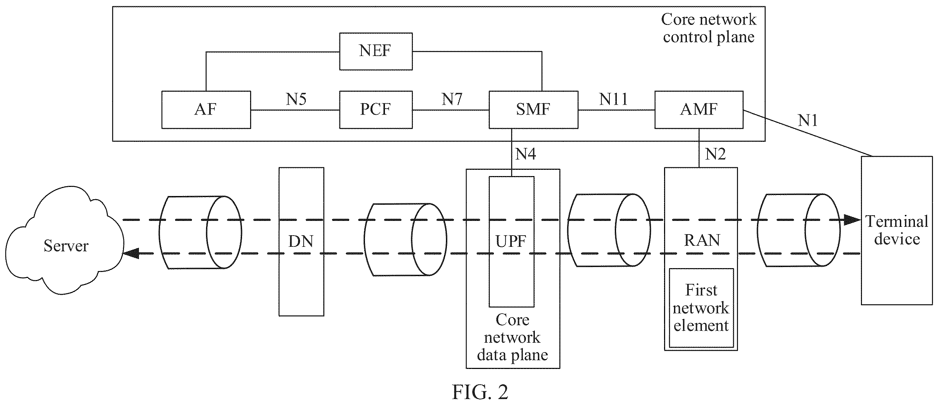

For ease of understanding embodiments of this application, a communication system applicable to embodiments of this application is first briefly described with reference to FIG. 2.

FIG. 2 is a diagram of a communication system applicable to a semantic information transmission method in an embodiment of this application. As shown in FIG. 2, the communication system includes a server (server) in a cloud, a data network (data network, DN), a core network (core network, CN), a radio access network (radio access network, RAN) device, a terminal device, and the like. A first network element exists (or is deployed) in the core network or a radio access network. The first network element stores data in a semantic library, and is configured to provide the semantic library for the terminal device or the server. Optionally, the first network element may further assist the terminal device or the server in performing processes such as semantic information extraction, semantic encoding, and channel encoding, or channel decoding, semantic decoding, and semantic information recovery. FIG. 2 shows that the first network element is deployed on a RAN side.

In the example shown in FIG. 2, the terminal device may be connected, via a radio air interface, to the radio access network device deployed by an operator. The radio access network device is connected to a core network device in a wireless or wired manner. The core network device and the radio access network device may be different physical devices, or may be a same physical device that integrates a logical function of the core network and a logical function of the radio access network.

The radio access network device is mainly configured to implement functions such as a radio physical layer function, resource scheduling and radio resource management, radio access control, and mobility management. For example, as shown in FIG. 2, the core network device may include function units such as an access and mobility management function (access and mobility function, AMF), a user plane function (user plane function, UPF), a session management function (session management function, SMF), a policy control function (policy control function, PCF), an application function (application function, AF), and a network exposure function network element (network exposure function, NEF). These function units may work independently, or may be combined to implement some control functions. For example, the AMF is configured to implement access control and mobility management functions such as access authentication, security encryption, and location registration of the terminal device, session management functions such as establishment, release, and change of a user plane transmission path, and functions such as analyzing some slice (slice)-related data (for example, congestion) and terminal device-related data. The UPF mainly implements functions such as routing and forwarding of user plane data, for example, is responsible for data packet filtering, data transmission/forwarding, rate control, and charging information generation for the terminal device. The UPF is a core network data plane function network element, and the other core network elements are core network control plane function network elements.

As shown in FIG. 2, the communication devices (network elements) may communicate with each other by establishing a connection through an interface. For example, the terminal device may establish an air interface connection to the RAN device through a Uu interface, to perform transmission of user plane data and control plane signaling. The RAN device and the core network device may communicate with each other by establishing a connection through a next generation network (next generation, NG) interface (N2 interface), to perform transmission of the user plane data and the control plane signaling. The core network elements may also communicate with each other through an NG (where "NG" is "N" for short) interface. For example, the UPF and the SMF may communicate with each other by establishing a connection through an N4 interface. It is clear that, the terminal device may further establish a control plane signaling connection to the AMF through an NG interface 1 (N1 interface). An interface for communication between the communication devices is not limited in embodiments of this application. It should be noted that FIG. 2 is merely a diagram of an example architecture. In addition to the communication devices shown in FIG. 2, the communication system may further include another function unit or function entity. For example, the core network device may further include another function unit like a unified data management function (unified data management, UDM). This is not limited in embodiments of this application.

For example, in the architecture shown in FIG. 2, the server may store video source data or audio source data, and the terminal device may request the video source data or the audio source data from the server over the network architecture shown in FIG. 2. The server may obtain the semantic library from the first network element, perform semantic extraction, encoding, and the like on the video source data or the audio source data by using the semantic library, to obtain a data stream (data stream), and then transmit the data stream through a network. For example, the network transmission may include transmission through the DN, a core network element (for example, the UPF) and a RAN that are in LTE, 5G, or a next-generation air interface 6G, and the like to the terminal device. The terminal device may also obtain the semantic library from the first network element, and perform semantic decoding, semantic information recovery, and the like on the received data stream by using the semantic library, to implement semantic communication between the server and the terminal device. For example, the terminal device may be a device like a mobile phone terminal, head mounted display XR glasses, a video player, or a holographic projector.

In embodiments of this application, the communication system shown in FIG. 2 may be a cellular system related to the 3rd generation partnership project (3rd generation partnership project, 3GPP), for example, a universal mobile telecommunications system (universal mobile telecommunications system, UMTS), a 4G/5G mobile communication system (including standalone networking and non-standalone networking), or a future-oriented evolved system (for example, a 6G mobile communication system), or may be an open radio access network (open RAN, O-RAN, or ORAN), a cloud radio access network (cloud radio access network, CRAN), or the like, or may be a communication system that integrates the foregoing two or more systems. This is not limited in embodiments of this application.

In embodiments of this application, the radio access network device may also be sometimes referred to as an access network device, a network device, a RAN node, a RAN entity, an access node, or the like. The radio access network device forms a part of the communication system shown in FIG. 2, to help the terminal device implement radio access.

In a possible scenario, the radio access network device may be a base station (base station), an evolved NodeB (evolved NodeB, eNodeB), an access point (access point, AP), a transmission reception point (transmission reception point, TRP), a next generation NodeB (next generation NodeB, gNB), a next generation base station in a 6th generation (6th generation, 6G) mobile communication system, a base station in a future mobile communication system, an access node in a Wi-Fi system, or the like. The RAN node may be a macro base station, a micro base station, an indoor base station, a relay node, a donor node, or a radio controller in a CRAN scenario. Optionally, the RAN node may alternatively be a server, a wearable device, a vehicle, a vehicle-mounted device, or the like. For example, an access network device in a vehicle to everything (vehicle to everything, V2X) technology may be a road side unit (road side unit, RSU). All or some functions of the radio access network device in this application may alternatively be implemented via a software function running on hardware, or may be implemented via a virtualization function instantiated on a platform (for example, a cloud platform). The radio access network device in this application may alternatively be a logical node, a logical module, or software that can implement all or some functions of the radio access network device.

In an NR technology, a radio access network device (for example, a gNB) may include one gNB central unit (Central Unit, CU) and one or more gNB distributed units (Distributed Unit, DU). The gNB-CU and the gNB-DU are different logical nodes, and may be deployed on different physical devices or deployed on a same physical device.

If an architecture in which a control plane and a user plane are split is considered, the gNB-CU may be further divided into a central unit-control plane (Central Unit-Control Plane, CU-CP) entity (which may also be referred to as a CU-CP node) and a central unit-user plane (Central Unit-User Plane, CU-UP) entity (which may also be referred to as a CU-UP node). The gNB-CU-CP is a control plane entity, and is configured to provide signaling control. The gNB-CU-UP is a user plane entity, and is configured to provide transmission of data of the terminal device.

In a possible scenario, for example, the RAN node may be the foregoing CU, DU, CU-CP, or CU-UP. The CU and the DU may be separately arranged, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH).

In different systems, the CU (or the CU-CP and the CU-UP), the DU, or the RU may alternatively have different names, but a person skilled in the art may understand meanings thereof. For example, in an ORAN system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

The terminal device may also be referred to as a terminal, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, autonomous driving, remote medical (remote medical), a smart grid (smart grid), smart furniture, a smart home (smart home), smart office, smart wearables, smart transportation, and a smart city (smart city). The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A device form of the terminal is not limited in embodiments of this application.

It should be understood that, in embodiments of this application, the "radio access network device" may alternatively be described differently. For example, the "radio access network device" may also be referred to as a network device, a RAN node, or an access network device. Unless otherwise specified, the "radio access network device" is described below as the "network device" in this application. The network device is an original expression of an access network device (for example, a base station).

It should be further understood that the communication system shown in FIG. 2 is merely an example, and should not constitute any limitation on the communication system applicable to embodiments of this application. For example, the communication system shown in FIG. 2 may further include more or fewer network nodes, for example, a terminal device or a radio access network device. The radio access network device or the terminal device included in the communication system shown in FIG. 2 may be the foregoing radio access network device or terminal device in various forms. Details are not shown one by one in the figure in embodiments of this application.

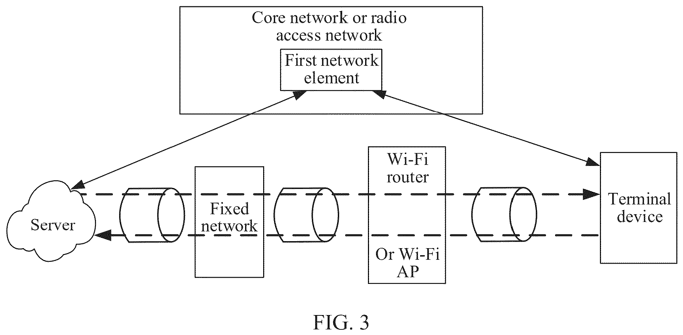

FIG. 3 is a diagram of another communication system applicable to a semantic information transmission method in an embodiment of this application. As shown in FIG. 3, the communication system includes a server (server) located in a cloud, a fixed network, a wireless fidelity (wireless fidelity, Wi-Fi) network, a terminal device, and the like. The server and the terminal device are connected to a core network or a radio access network through a network. A first network element exists (or is deployed) in the core network or the radio access network, and the first network element stores data in a semantic library.

In the architecture shown in FIG. 3, the server may store video source data or audio source data, and the terminal device may request the video source data or the audio source data from the server over the network architecture shown in FIG. 3. The server may obtain the semantic library from the first network element, perform semantic extraction, encoding, and the like on the video source data or the audio source data by using the semantic library, to obtain a data stream, and then transmit the data stream through a network. For example, the network transmission may include transmission through the fixed network, a Wi-Fi router, a Wi-Fi AP, or the like to the terminal device. The terminal device may also obtain the semantic library from the first network element, and perform semantic decoding (decoding), semantic information recovery, and the like on the received data stream by using the semantic library, to implement semantic communication between the server and the terminal device.

It should be further understood that the communication system shown in FIG. 3 is merely an example, and should not constitute any limitation on the communication system applicable to embodiments of this application. For example, the communication system shown in FIG. 3 may further include more or fewer network nodes, and the terminal device included in the communication system shown in FIG. 3 may be the foregoing terminal device in various forms. Details are not shown one by one in the figure in embodiments of this application.

Optionally, in a possible implementation, the first network element shown in FIG. 2 and FIG. 3 may be a reasoning plane function network element (reasoning plane function, RPF). It is clear that, in another implementation of this application, the first network element may alternatively be another network element or have another name. Alternatively, a function of the first network element may be integrated into an existing core network element. Alternatively, a function of the first network element may be integrated into an existing radio access network device, and a new network element does not need to be deployed or disposed. This is not limited in embodiments of this application.

It should be understood that in embodiments of this application, the first network element may be deployed on a core network side, or may be deployed on a RAN side. This is not limited in embodiments of this application.

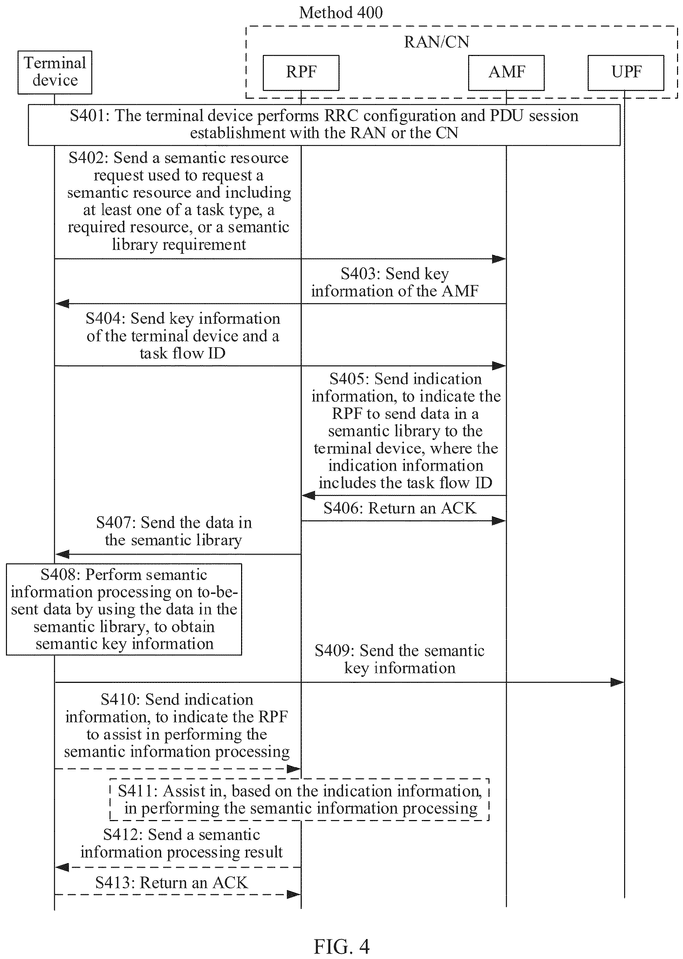

The following describes in detail the method provided in this application with reference to FIG. 4. FIG. 4 is an interaction diagram of a semantic information transmission method according to an embodiment of this application. The method 400 may be applied to the scenario shown in FIG. 2 or FIG. 3, and certainly may alternatively be applied to another communication scenario. This is not limited in embodiments of this application.

It should be understood that, in embodiments of this application, the method is described by using an example in which each device (or each network element) is used as an execution body for performing the method. By way of example, and not limitation, each device in this application may alternatively be a chip, a chip system, or a processor that supports the network element in implementing the method, or may be a logical node, a logical module, or software that can implement all or some functions of the network element.

It should be further understood that, in this application, "sending information to... (a network element)" may be understood as that a destination end of the information is the network element, and may include directly or indirectly sending the information to the network element. "Receiving information from... (a network element) or receiving information from a network element" may be understood as that a source end of the information is the network element, and may include directly or indirectly receiving the information from the network element. Necessary processing, such as a format change, may be performed on information between a source end and a destination end for sending the information. However, the destination end can understand valid information from the source end. A similar expression in this application may be understood similarly, and details are not described herein.

As shown in FIG. 4, the method 400 shown in FIG. 4 may include S401 to S413. The following describes in detail the steps in the method 400 with reference to FIG. 4.

S401: A terminal device performs radio resource control (radio resource control, RRC) configuration and protocol data unit (protocol data unit, PDU) session establishment with a RAN or a CN. A first network element (where an example in which the first network element is an RPF is used for description) is deployed in the RAN or the CN.

For example, the terminal device may be a transmitter device of semantic data.

S402: The terminal device sends a semantic resource request to an AMF, to request a semantic resource (request semantic resource) or request a semantic library resource.

For example, the semantic resource request may include: at least one of a task type (task type), a required resource (required resource), or a semantic library request (semantic library request).

The task type (which may also be referred to as a type of to-be-transmitted data, a type of to-be-transmitted semantic data, or the like) indicates a specific type of semantic communication performed between the terminal device and a receiver device (for example, another terminal device). For example, the task type may include video transmission, detection and classification of an object in a video, voice transmission, or the like. It should be understood that for the terminal device, (corresponding) semantic source encoding models, channel encoding models, data models, and the like used for different task types are different. In other words, different task types may correspond to different semantic libraries, or content in semantic libraries corresponding to (or requested for) different task types is different.

For example, the required resource may include a computing resource (including a computing resource used for performing semantic extraction and encoding and the like on to-be-transmitted data by using a semantic library) of the terminal device and a communication resource (a communication resource used for transmission of an encoded data stream).

For example, the semantic library request indicates that the terminal device needs to obtain a semantic library. For example, the semantic library may include a semantic source-channel encoding model, a data model that is helpful to the encoding model, and the like.

S403: After receiving the semantic resource request, the AMF sends key information of the AMF to the terminal device.

Optionally, the AMF may further send semantic library status (semantic library status) information to the terminal device. For example, the semantic library status information may include a storage location of the semantic library, and the source-channel encoding model, the data model, and the like that are included in the semantic library.

S404: After receiving the key information of the AMF, the terminal sends key information of the terminal and a task flow identity (identity, ID) to the AMF. The task flow ID identifies a task flow (where the task flow may also be referred to as a to-be-transmitted data stream). The task flow ID may be determined based on a type of a to-be-transmitted task. Different task types correspond to different task flow identity IDs.

Optionally, the task flow ID may also be referred to as an RPF flow ID (RPF Flow ID).

Through S403 and S404, the terminal device and the AMF complete key exchange. In this way, identity verification and authentication on the terminal device are implemented.

S405: The AMF sends indication information (where the indication information may also be referred to as third indication information) to the RPF, where the indication information indicates the RPF to send data in the semantic library to the terminal device, and the indication information includes the task flow ID.

Optionally, the indication information may further include a semantic library ID (semantic library ID). The semantic library ID identifies the semantic library. Different semantic libraries correspond to different semantic library IDs. The semantic library ID may be determined based on the task type. It is clear that, the indication information may include at least one of the task flow ID or the semantic library ID.

S406: After receiving the indication information, the RPF returns an acknowledgement message (acknowledgement, ACK) to the AMF. The acknowledgement message indicates that the RPF correctly receives the indication information.

Optionally, the RPF may further send session status information (session status) between the RPF and the AMF to the AMF, where the session status information (session status) is used to acknowledge that the AMF and the RPF are in a normal or correct connection state, and can perform normal communication.

S407: After receiving the indication information, the RPF sends the data in the semantic library to the terminal device.

Optionally, in this embodiment of this application, because the RPF stores one semantic library or a plurality of semantic libraries, in a possible implementation, the RPF determines, from the plurality of stored semantic libraries based on the task flow ID, the semantic library corresponding to the task flow ID, and then sends the semantic library or the data in the semantic library to the terminal device. In another possible implementation, the RPF determines, from the plurality of stored semantic libraries based on the semantic library ID, the semantic library corresponding to the semantic library ID, and then sends the data in the semantic library (which may also be referred to as content included in the semantic library) to the terminal device. In still another possible implementation, when storing one semantic library, the RPF determines, from the semantic library based on the task flow ID, data such as a semantic source encoding model, a channel encoding model, or a data model that corresponds to the task flow ID, and then sends the data (namely, content or data included in the semantic library) to the terminal device.

Optionally, in this embodiment of this application, in another possible implementation, the terminal device may also store some or a few semantic libraries. In this case, if there is no semantic library corresponding to the task flow ID in the semantic libraries stored in the RPF, or there is no semantic source encoding model, channel encoding model, data model, or the like corresponding to the task flow ID in content of the semantic libraries stored in the RPF, the RPF may send the semantic library ID to the terminal device in S407. After receiving the semantic library ID, the terminal device may determine, from the semantic libraries stored in the terminal device, the semantic library corresponding to the semantic library ID, to obtain the data in the semantic library. In this case, the RPF may not need to send the data in the semantic library to the terminal device, and only needs to send the semantic library ID.

It is clear that, when the terminal device stores some or a few semantic libraries, and the semantic library stored in the terminal device corresponds to the task flow, that is, a semantic source encoding model, a channel encoding model, or a data model included in the semantic library may be used by the terminal device to perform semantic information processing on to-be-sent data, the terminal device may alternatively not need to perform S401 to S407 above, and the terminal device may directly perform the semantic information processing on the to-be-sent data by using the semantic library, that is, directly perform S408 and S409.

For example, the data in the semantic library may include at least one of a semantic source decoding model, a channel decoding model, data or a model that is helpful to a source decoding model or a channel decoding model, or the like.

S408: After receiving the data in the semantic library, the terminal device performs a semantic information processing (semantic processing) process on the to-be-sent data (which may also be referred to as to-be-transmitted semantic data) by using the data in the semantic library, to obtain semantic key information. Optionally, the semantic key information may also be referred to as a to-be-sent data stream or semantic data stream.

For example, the semantic processing (which may also be referred to as semantic information processing) process performed by the terminal device may include processing processes such as semantic information extraction, semantic encoding, and channel encoding performed on the to-be-transmitted (to-be-sent) data (for example, video data or voice data) by using the semantic library.

S409: The terminal device sends the semantic key information to a UPF.

After receiving the semantic key information, the UPF may forward the semantic key information to a receiver device (for example, another terminal device), to implement semantic communication. For example, the UPF may forward the semantic key information to a radio access network device (for example, a base station), and the radio access network device may forward the semantic key information to the receiver device.

Optionally, S409 may alternatively be replaced with the following: The terminal device sends the semantic key information to the RAN, and after receiving the semantic key information, the RAN may forward the semantic key information to the receiver device.

Optionally, in a possible implementation, when performing the semantic information processing process on the to-be-sent data, the terminal device may alternatively negotiate with the RPF about task division, so that the RPF assists in performing the semantic processing, and feeds back a processing result to the terminal device, to improve efficiency of performing the semantic information processing by the terminal device, and reduce requirements on a processing capability of the terminal device. In this case, the method 400 may further include S410 to S412. Before S409, the terminal device may perform S410 to S412.

S410: The terminal device sends indication information (where the indication information may also be referred to as first indication information) to the RPF, where the indication information indicates the RPF to assist in performing the semantic information processing.

For example, the indication information may include the to-be-transmitted (to-be-sent) data (which may also be referred to as data on which semantic processing is to be performed), a task cooperation instruction (task coop instruction), a task requirement (task requirement), or the like.

For example, the to-be-transmitted (to-be-sent) data may include data that needs assistance of the RPF for the semantic processing, and the data may be a part or all of the total to-be-transmitted data. The task cooperation instruction may indicate the RPF to assist in performing the semantic information processing, for example, may indicate specific semantic processing processes (for example, semantic information extraction, semantic encoding, and channel encoding) that need to be performed by the RPF. The task requirement may indicate a requirement of the RPF when performing the semantic information processing process. For example, the task requirement may include a delay (delay) requirement, a quality of service (quality of service, QoS) requirement, or the like.

Optionally, the indication information may further include the task flow ID. The RPF may determine, from the stored semantic libraries based on the task flow ID, the semantic library corresponding to the task flow ID, to perform the semantic processing on the to-be-transmitted data by using the data in the semantic library.

It is clear that, in a possible implementation, if the RPF, taking the place of the terminal device, performs the semantic process, that is, the terminal device does not need to perform the semantic processing process, the RPF may alternatively not need to send the data in the semantic library to the terminal device. For example, the terminal device may send the to-be-transmitted (to-be-sent) data, the task requirement (task requirement), the task flow ID, and the like to the RPF. The RPF may then determine the data in the semantic library based on the task flow ID, perform the semantic information processing (semantic processing) process on the to-be-sent data by using the data in the semantic library to obtain the semantic key information, and then send the semantic key information to the terminal device.

S411: The RPF assists in, based on the indication information, performing the semantic information processing.

For example, the semantic information processing process assisted by the RPF may include one or more of processing processes such as semantic information extraction, semantic encoding, and channel encoding performed on the to-be-transmitted (to-be-sent) data (for example, video data or voice data) by using the semantic library.

S412: The RPF sends a semantic information processing result to the terminal device.

For example, the semantic information processing result may include semantic key information. The terminal device obtains the semantic key information obtained through processing by the RPF and the semantic key information obtained through processing by the terminal device. After integrating the two parts of semantic key information, the terminal device may perform S409 above, that is, send the integrated semantic key information to the UPF.

Optionally, after the terminal device receives the semantic information processing result, the method may further include S413.

S413: The terminal device returns an acknowledgement message (acknowledgement, ACK) to the RPF, where the acknowledgement message indicates that the terminal device correctly receives the semantic information processing result.

Optionally, the terminal device may further send session status information (session status) between the RPF and the terminal device to the RPF, where the session status information (session status) is used to acknowledge that the RPF and the terminal device are in a normal or correct connection state, and can perform normal communication.

According to the method 400 above, the semantic library is stored in the RPF in the core network or the access network, and any terminal device accessing the core network or the access network can obtain the semantic library. In this way, the semantic library is public. This improves efficiency of obtaining the semantic library by the terminal device, and is user-friendly. Based on the semantic library provided by the RPF, the semantic processing can be implemented when a computing resource, a storage resource, or the like of the terminal device is limited, thereby improving efficiency of performing semantic information extraction, semantic encoding, and channel encoding by the terminal device, and reducing requirements on the processing capability of the terminal device. The terminal device is allowed to send the semantic key information to the UPF or the RAN in a communication process, and transmission of the semantic key information can be reliably performed between the transmitter device and the receiver device in real time, thereby improving efficiency of the semantic communication.

It should be understood that the receiver device of the semantic key information needs to perform processing processes such as semantic decoding and semantic information recovery (that is, perform semantic processing processes). In the process, the receiver device also needs to obtain a corresponding semantic library to correctly perform the processing processes. Therefore, the receiver device may also obtain data in the corresponding semantic library from the RPF in a similar manner, and perform channel decoding, semantic decoding, and semantic information recovery on the received semantic key information by using the data in the semantic library, to implement semantic information transmission. A communication procedure in which the receiver device obtains the corresponding semantic library is similar to that in S401 to S408 in the method 400. For brevity, details are not described herein again.

Optionally, when performing channel decoding, semantic decoding, and semantic information recovery on the received semantic key information, the receiver device may alternatively negotiate with the RPF about task division, so that the RPF assists in performing the semantic processing, and feeds back a processing result to the receiver device, to improve efficiency of performing the semantic information processing by the receiver device, and reduce requirements on the processing capability of the terminal device. A communication procedure in which the receiver device performs the semantic processing with assistance of the RPF is similar to that in S410 to S413 in the method 400. For brevity, details are not described herein again.

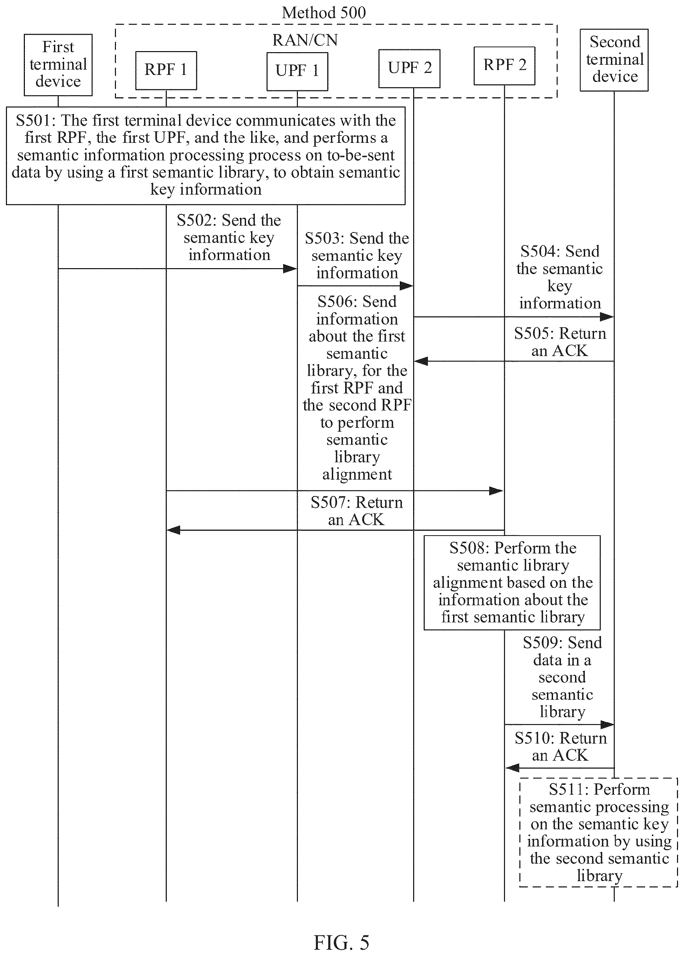

FIG. 5 is an interaction diagram of another semantic information transmission method according to an embodiment of this application. As shown in FIG. 5, the method 500 shown in FIG. 5 may include S501 to S511. The following describes in detail the steps in the method 500 with reference to FIG. 5.

S501: A first terminal device communicates with a first RPF and a first UPF that are in a network in which the first terminal device is located, and performs a semantic information processing process on to-be-sent data by using a first semantic library, to obtain semantic key information (where the semantic key information may also be referred to as a to-be-sent data stream).

S502: The first terminal device sends the semantic key information to the first UPF.

The first RPF, the first UPF, a first AMF, and the first terminal device are located in the same network, or the first AMF, the first RPF, and the first UPF provide a communication service for the first terminal device. For example, that both the first RPF and the first AMF are connected to a same UPF (the first UPF) may be considered as that the first RPF, the first UPF, the first AMF, and the first terminal device are located in the same network. The first terminal device is a transmitter device in semantic communication, and the first RPF stores one or more semantic libraries.

A second RPF, a second UPF, a second AMF, and a second terminal device are located in a same network, or the second AMF, the second RPF, and the second UPF provide a communication service for the second terminal device. For example, that both the second RPF and the second AMF are connected to a same UPF (the second UPF) may be considered as that the second RPF, the second UPF, the second AMF, and the second terminal device are located in the same network. The second terminal device is a receiver device in the semantic communication, and the second RPF stores one or more semantic libraries.

Optionally, for a process in which the first terminal device communicates with the first RPF and the first UPF and a process in which the first terminal device performs the semantic information processing on the to-be-sent data by using the first semantic library to obtain the semantic key information, refer to the specific process of the method 400 shown in FIG. 4. For brevity, details are not described herein again.

S503: The first UPF sends the semantic key information to the second UPF.

S504: The second UPF sends the semantic key information to the second terminal device.

Optionally, the method 500 may further include S505: After receiving the semantic key information, the second terminal device returns an acknowledgement message (acknowledgement, ACK) to the second UPF. The acknowledgement message indicates that the second terminal device correctly receives the semantic key information.

Optionally, the second terminal device may further send session status information (session status) between the second RPF and the second terminal device to the second UPF, where the session status information (session status) is used to acknowledge that the second RPF and the second terminal device are in a normal or correct connection state, and can perform normal communication.

S506: The first RPF sends information about the first semantic library to the second RPF, for the first RPF and the second RPF to perform semantic library alignment.

In S501, when processing the to-be-sent data to obtain the semantic key information, the first terminal device performs processing processes such as semantic information extraction, semantic encoding, and channel encoding on the to-be-sent data (for example, video data or voice data) by using the first semantic library.

In S504, after receiving the semantic key information, the second terminal device also needs to use a semantic library, to perform processing processes such as semantic decoding and semantic information recovery on the semantic key information. The first semantic library used by the first terminal device in the semantic processing processes (for example, semantic information extraction, semantic encoding, and channel encoding) needs to correspond to a second semantic library used by the second terminal device in the semantic processing processes (for example, channel decoding, and semantic information decoding and recovery), to ensure that the second terminal device correctly performs semantic decoding and recovers accurate data. Therefore, the first RPF may send, to the second RPF, the information about the first semantic library used by the first terminal device in the semantic processing processes (for example, semantic information extraction, semantic encoding, and channel encoding). Based on the information about the first semantic library, the second RPF may determine, from the one or more stored semantic libraries, the second semantic library corresponding to the first semantic library, or determine data (namely, content or data included in the second semantic library) such as a semantic source decoding model and a channel decoding model that correspond to a semantic source encoding model, a channel encoding model, and the like used by the first terminal device. It is ensured that the second RPF can determine correct and available semantic library data, thereby ensuring precision and validity of the data in the second semantic library.

The second terminal device may perform channel decoding, semantic information decoding, and semantic information recovery on the received semantic key information by using the second semantic library or the determined data such as the semantic source decoding model and the channel decoding model.

In a possible implementation, the first RPF may send a task flow ID to the second RPF. After receiving the task flow ID, the second RPF determines, from the stored semantic libraries, a semantic library (namely, the second semantic library) corresponding to the task flow ID. In another possible implementation, the first RPF may send an ID of the first semantic library to the second RPF, and the second RPF determines, from the stored semantic libraries based on the ID of the first semantic library, the second semantic library corresponding to the ID of the first semantic library. In still another possible implementation, the first RPF may send, to the second RPF, data such as the semantic source decoding model and the channel decoding model that correspond to the semantic source encoding model, the channel encoding model, and the like used by the first terminal device, and the second RPF determines, based on such information, data such as the semantic source decoding model and the channel decoding model from the stored semantic libraries.

For example, the information about the first semantic library may include at least one of the ID of the first semantic library, the task flow ID, or the semantic source encoding model, the channel encoding model, or a data model that is used by the first terminal device.

Optionally, the method 500 may further include S507: After receiving the information about the first semantic library, the second RPF returns an acknowledgement (acknowledgement, ACK) message to the first RPF. The acknowledgement message indicates that the RPF correctly receives the information about the first semantic library.

Optionally, the second RPF may further send session status information (session status) between the second RPF and the first RPF to the first RPF, where the session status information (session status) is used to acknowledge that the second RPF and the first RPF are in a normal or correct connection state, and can perform normal communication.

S508: The second RPF performs the semantic library alignment (semantic library alignment) based on the information about the first semantic library.

For example, that the second RPF performs the semantic library alignment may be understood as follows: The second RPF determines, from the one or more stored semantic libraries based on the information about the first semantic library, the second semantic library corresponding to the first semantic library, or determines data such as the semantic source decoding model and the channel decoding model that correspond to the semantic source encoding model, the channel encoding model, and the like used by the first terminal device.

For example, the second RPF may determine, from the stored semantic libraries based on the task flow ID, a semantic library (namely, the second semantic library) corresponding to the task flow ID. Alternatively, the second RPF may determine, from the stored semantic libraries based on the ID of the first semantic library, the second semantic library corresponding to the ID of the first semantic library. Alternatively, the second RPF determines data such as the semantic source decoding model and the channel decoding model from the stored semantic libraries based on data such as the semantic source decoding model and the channel decoding model that correspond to the semantic source encoding model, the channel encoding model, and the like used by the first terminal device.

S509: The second RPF sends the data in the second semantic library to the second terminal device.

For example, the data in the second semantic library may include at least one of the semantic source decoding model, the channel decoding model, data or a model that is helpful to the source decoding model or the channel decoding model, or the like.

Optionally, the method 500 may further include S510: After receiving the data in the second semantic library, the second terminal device returns an acknowledgement message (acknowledgement, ACK) to the second RPF. The acknowledgement message indicates that the second terminal device correctly receives the data in the second semantic library.

S511: The second terminal device performs semantic processing on the semantic key information by using the second semantic library.

For example, after receiving the semantic key information, the second terminal device performs, by using the data in the second semantic library, semantic processing processes such as channel decoding, semantic information decoding, and semantic recovery on the semantic key information, to implement a semantic communication process between the first terminal device and the second terminal device.

Optionally, in a possible implementation, when performing the semantic processing (for example, channel decoding, semantic information decoding, and semantic recovery) on the semantic key information, the second terminal device may alternatively negotiate with the second RPF about task division, so that the second RPF assists in performing the semantic processing, and feeds back a processing result to the second terminal device, to improve efficiency of performing the semantic information processing by the second terminal device, and reduce requirements on a processing capability of the second terminal device. For a similar communication procedure, refer to the descriptions of steps S410 and S413 in the method 400. For brevity, details are not described herein again.

According to the method 500 above, a semantic library resource is stored in the RPF in a core network or an access network, and any terminal device accessing the core network or the access network can obtain the semantic library. In this way, the semantic library is public. This improves efficiency of obtaining the semantic library by the terminal device, and is user-friendly. The transmitter device and the receiver device in the semantic communication implement the semantic processing by using the semantic libraries provided by the RPFs when a computing resource and a storage resource are limited, so that the semantic communication is performed between the transmitter device and the receiver device at low communication overheads. Transmission of the semantic key information can be reliably performed between the transmitter device and the receiver device in real time, thereby improving efficiency of the semantic communication and reducing requirements on the processing capability of the terminal device.

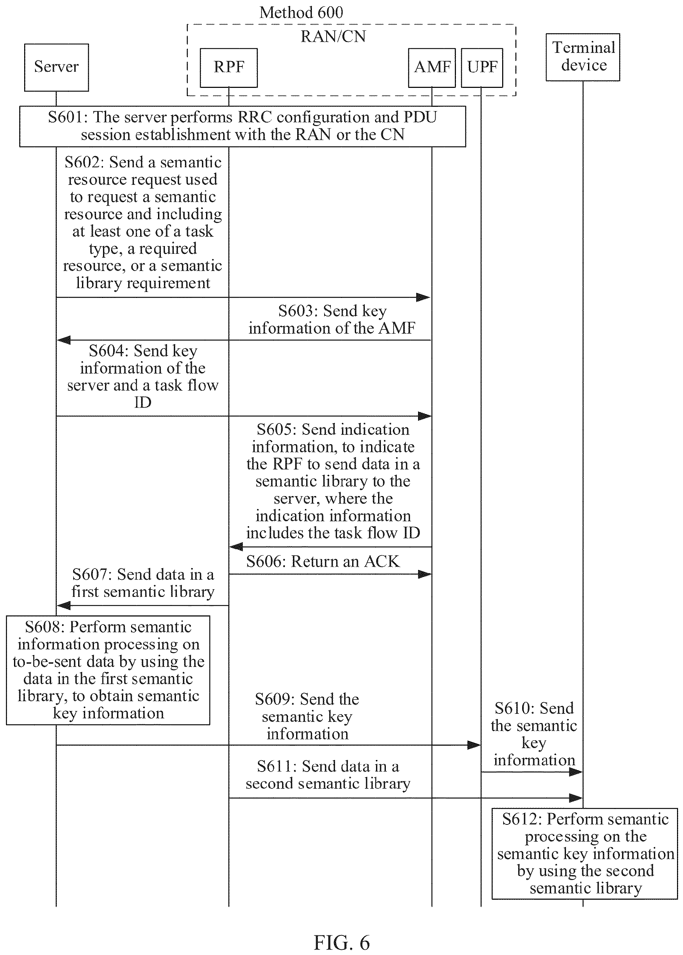

FIG. 6 is an interaction diagram of another semantic information transmission method according to an embodiment of this application. As shown in FIG. 6, the method 600 shown in FIG. 6 may include S601 to S612. The following describes in detail the steps in the method 600 with reference to FIG. 6.

In the example shown in FIG. 6, a server (which may also be referred to as an APP server) is used as a transmitter device in semantic communication, and a terminal device may request data (for example, a video resource or an audio resource) in the semantic communication from the server. The server performs processing processes such as semantic information extraction, semantic encoding, and channel encoding on the data by using a semantic library, to obtain semantic key information, and sends the semantic key information to the terminal device. After receiving the semantic key information, the terminal device also needs to use a semantic library, to perform processing processes such as semantic decoding and semantic information recovery on the semantic key information.

S601: The server performs RRC configuration and PDU session establishment with a RAN or a CN. A first network element (where an example in which the first network element is an RPF is used for description) is deployed in the RAN or the CN.

S602: The server sends a semantic resource request to an AMF, to request semantic resources (request semantic resource) or request semantic library resources.

A task type (also referred to as a type of to-be-transmitted data, a type of to-be-transmitted semantic data, or the like) indicates a specific type of the semantic communication performed between the server and the terminal device. For example, the task type may include video transmission, detection and classification of an object in a video, voice transmission, or the like. It should be understood that, (corresponding) semantic source encoding models, channel encoding models, data models, and the like used for different task types are different. In other words, different task types may correspond to different semantic libraries, or content in semantic libraries corresponding to (or requested for) different task types is different.

For example, a required resource may include a computing resource (including a computing resource used for performing semantic extraction and encoding and the like on to-be-transmitted data by using a semantic library) of the server and a communication resource (a communication resource used for transmission of an encoded data stream).

For example, a semantic library request indicates that the server needs to obtain a semantic library. For example, the semantic library may include a semantic source-channel encoding model, a data model that is helpful to the encoding model, and the like.

S603: After receiving the semantic resource request, the AMF sends key information of the AMF to the server.

Optionally, the AMF may further send semantic library status (semantic library status) information to the server. For example, the semantic library status information may include a storage location of the semantic library, and the source-channel encoding model, a source-channel decoding model, the data model, and the like that are included in the semantic library.

S604: After receiving the key information of the AMF, the server sends key information of the server and a task flow identity (identity, ID) to the AMF. The task flow ID identifies a task flow (where the task flow may also be referred to as a to-be-transmitted data stream). The task flow ID may be determined based on the task type. Different task types correspond to different task flow identifier IDs.

Optionally, the task flow ID may also be referred to as an RPF flow ID (RPF Flow ID).

Through S603 and S604, the server and the AMF complete key exchange. In this way, identity verification and authentication on the server are implemented.

S605: The AMF sends indication information to the RPF, where the indication information indicates the RPF to send data in the semantic library to the server, and the indication information includes the task flow ID.

Optionally, the indication information may further include a semantic library ID (semantic library ID). The semantic library ID identifies the semantic library. Different semantic libraries correspond to different semantic library IDs. The semantic library ID may be determined based on the task type. It is clear that, the indication information may include at least one of the task flow ID or the semantic library ID.

S606: After receiving the indication information, the RPF returns an acknowledgement message (acknowledgement, ACK) to the AMF, where the acknowledgement message indicates that the RPF correctly receives the indication information.

Optionally, the RPF may further send session status information (session status) between the RPF and the AMF to the AMF, where the session status information (session status) is used to acknowledge that the AMF and the RPF are in a normal or correct connection state, and can perform normal communication.

S607: After receiving the indication information, the RPF sends data in a first semantic library to the server.

Optionally, in this embodiment of this application, because the RPF stores one semantic library or a plurality of semantic libraries, in a possible implementation, the RPF determines, from the plurality of stored semantic libraries based on the task flow ID, the first semantic library corresponding to the task flow ID, and then sends the first semantic library (or the data in the first semantic library) to the server. In another possible implementation, the RPF determines, from the plurality of stored semantic libraries based on the semantic library ID, the first semantic library corresponding to the semantic library ID, and then sends the first semantic library to the server. In still another possible implementation, when storing one semantic library, the RPF determines, from the semantic library based on the task flow ID, data such as a semantic source encoding model, a channel encoding model, or a data model that corresponds to the task flow ID, and then sends the data (the data in the first semantic library) to the server.

Optionally, in this embodiment of this application, in another possible implementation, the server may also store some or a few semantic libraries. In this case, if there is no semantic library corresponding to the task flow ID in the semantic libraries stored in the RPF, or there is no semantic source encoding model, channel encoding model, data model, or the like corresponding to the task flow ID in content of the semantic libraries stored in the RPF, the RPF may send the semantic library ID to the server in S607. After receiving the semantic library ID, the server may determine, from the semantic libraries stored in the server, the first semantic library corresponding to the semantic library ID, to obtain the data in the first semantic library. In this case, the RPF may not need to send the data in the semantic library to the server, and only needs to send the semantic library ID.

It is clear that, when the server stores some or a few semantic libraries, and the semantic library stored in the server corresponds to the task flow, that is, a semantic source encoding model, a channel encoding model, or a data model included in the semantic library may be used by the server to perform semantic information processing on to-be-sent data, the server may alternatively not need to perform S601 to S604 above, and the server may directly perform the semantic information processing on the to-be-sent data by using the data in the semantic library (the first semantic library), that is, directly perform S608 and S609.

For example, the data in the first semantic library may include at least one (at least one type) of a semantic source encoding model, a channel encoding model, data or a model that is helpful to a source encoding model or a channel encoding model, or the like.

S608: After receiving the data in the first semantic library, the server performs a semantic information processing process (semantic processing) on the to-be-sent data (to-be-transmitted semantic data) by using the data in the first semantic library, to obtain semantic key information. Optionally, the semantic key information may also be referred to as a to-be-sent data stream or semantic data stream.

For example, the semantic information processing process performed by the server may include processing processes such as semantic information extraction, semantic encoding, and channel encoding performed on the to-be-transmitted (to-be-sent) data (for example, video data or voice data) by using the first semantic library.

S609: The server sends the semantic key information to a UPF.

S610: The UPF sends the semantic key information to the terminal device.

S611: The RPF sends data in a second semantic library to the terminal device.

In S608, when processing the to-be-sent data to obtain the semantic key information, the server performs processing processes such as semantic information extraction, semantic encoding, and channel encoding on the to-be-sent data (for example, video data or voice data) by using the first semantic library.

After receiving the semantic key information, the terminal device also needs to use a semantic library, to perform processing processes such as semantic decoding and semantic information recovery on the semantic key information. The first semantic library used by the server in the semantic processing processes (for example, semantic information extraction, semantic encoding, and channel encoding) needs to correspond to the second semantic library used by the terminal device in semantic processing processes (for example, channel decoding, and semantic information decoding and recovery), to ensure that the terminal device correctly performs semantic decoding and recovers accurate data.

Therefore, the RPF may determine, in the one or more stored semantic libraries based on information (for example, the task flow ID and the semantic library ID) about the first semantic library used by the server in the semantic processing processes (for example, including semantic information extraction, semantic encoding, and channel encoding), the second semantic library corresponding to the first semantic library, or determine data such as a semantic source decoding model and a channel decoding model that correspond to a semantic source encoding model, a channel encoding model, and the like used by the server, and send the data in the second semantic library to the terminal device.

For example, the data in the second semantic library may include at least one of the semantic source decoding model, the channel decoding model, data or a model that is helpful to the source decoding model or the channel decoding model, or the like.

The terminal device may perform channel decoding, semantic information decoding, and semantic information recovery on the received semantic key information by using the second semantic library or the data such as the semantic source decoding model and the channel decoding model.

Optionally, for a specific process of sending from the RPF to the terminal device, refer to the specific process of S401 to S407 in the method 400. For brevity, details are not described herein again.

S612: The terminal device performs semantic processing on the semantic key information by using the second semantic library.

For example, after receiving the semantic key information, the terminal device performs, by using the second semantic library, processes such as channel decoding, semantic information decoding, and semantic recovery on the semantic key information, to obtain the semantic data sent by the server. In this way, a semantic communication process between the terminal device and the server is implemented.

Optionally, in a possible implementation, when performing the semantic processing (for example, channel decoding, semantic information decoding, and semantic recovery) on the semantic key information, the terminal device may alternatively negotiate with the RPF about task division, so that the RPF assists in performing the semantic processing, and feeds back a processing result to the terminal device, to improve efficiency of performing the semantic information processing by the terminal device, and reduce requirements on a processing capability of the terminal device. For a similar communication procedure, refer to the descriptions of steps S410 and S413 in the method 400. For brevity, details are not described herein again.

Optionally, in another possible implementation, when performing the semantic processing (for example, semantic information extraction, semantic encoding, and channel encoding) on the semantic key information, the server may alternatively negotiate with the RPF about task division, so that the RPF assists in performing the semantic processing, and feeds back a processing result to the server, to improve efficiency of performing the semantic information processing by the server. For a similar communication procedure, refer to the descriptions of steps S410 and S413 in the method 400. For brevity, details are not described herein again.

According to the method 600 above, the semantic library is stored in the RPF in the core network or the access network, and any terminal device accessing the core network or the access network can obtain the semantic library. In this way, the semantic library is public. This improves efficiency of obtaining the semantic library by the terminal device, and is user-friendly. In this way, the server and the terminal device in the semantic communication implement the semantic processing by using the semantic libraries provided by the RPF when computing and storage resources are limited, so that the semantic communication is performed between the server and the terminal device at low communication overheads. Transmission of the semantic key information can be reliably performed between the server and the terminal device in real time, thereby improving efficiency of the semantic communication and reducing requirements on processing capabilities of the terminal device and the server.

According to the semantic information transmission method provided in this application, a semantic library is stored in a network element (for example, an RPF) in a core network or an access network, and any device (for example, a terminal device or a server) accessing the core network or the access network can obtain the semantic library. In this way, the semantic library is public. The network element may assist the terminal device or the server in performing processes such as semantic information extraction and semantic encoding, or semantic decoding and semantic recovery, thereby improving efficiency of performing semantic processing (for example, including semantic information extraction, semantic encoding, and channel encoding, or channel decoding, semantic decoding, and semantic information recovery) processes by the terminal device or the server. According to the foregoing technical solutions, a transmitter device in semantic communication can obtain a bitstream having highly-compressed transmission content and bit error resilience for channel conditions, and a receiver device in the semantic communication can efficiently decode the received bitstream, thereby improving efficiency of the semantic communication.

It should be understood that the foregoing descriptions are merely intended to help a person skilled in the art better understand embodiments of this application, but are not intended to limit the scope of embodiments of this application. It is clear that a person skilled in the art may make various equivalent modifications or changes based on the foregoing examples. For example, some steps in the foregoing method embodiments may be unnecessary, or some steps may be newly added. Alternatively, any two or more of the foregoing embodiments are combined. A modified, changed, or combined solution also falls within the scope of embodiments of this application.

It should be further understood that division of manners, cases, categories, and embodiments in embodiments of this application is merely intended for ease of description, and should not constitute a particular limitation. Features in the manners, categories, cases, and embodiments may be combined without contradiction.

It should be further understood that various numbers in embodiments of this application are merely used for differentiation for ease of description, but are not intended to limit the scope of embodiments of this application. The sequence numbers of the foregoing processes do not mean execution sequences. The execution sequences of the processes should be determined based on functions and internal logic of the processes, and should not constitute any limitation on implementation processes of embodiments of this application.

It should be further understood that the foregoing descriptions of embodiments of this application emphasize differences between the embodiments. For same or similar parts that are not mentioned, refer to the embodiments. For brevity, details are not described herein again.

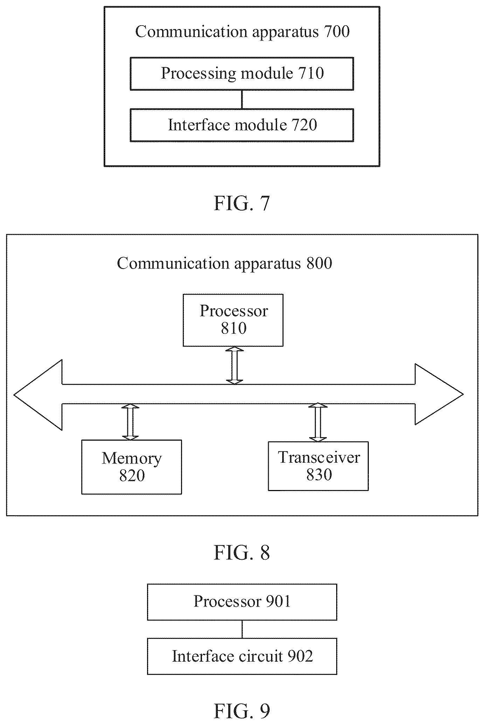

The foregoing describes in detail the methods in embodiments of this application with reference to FIG. 1 to FIG. 6. The following describes in detail communication apparatuses in embodiments of this application with reference to FIG. 7 to FIG. 9.

In embodiments, functional modules of each device (including the first network element (for example, an RPF), the terminal device, or the server) may be obtained through division according to the foregoing methods. For example, each functional module may be obtained through division based on each corresponding function, or two or more functions may be integrated into one processing module. The integrated module may be implemented in a form of hardware. It should be noted that module division in embodiments is an example and is merely logical function division. In practice, there may be another division manner.

It should be noted that related content of the steps in the foregoing method embodiments may be referenced to function descriptions of corresponding functional modules, and details are not described herein again.

The first network element, the terminal device, the server, and the like provided in embodiments of this application are configured to perform any semantic information transmission method provided in the foregoing method embodiments. Therefore, effects that are the same as those of the foregoing implementation methods can be achieved. When an integrated unit is used, the first network element, the terminal device, or the server may include a processing module, a storage module, and a communication module. The processing module may be configured to control and manage an action of the first network element, the terminal device, or the server, for example, may be configured to support the first network element, the terminal device, or the server in performing a step performed by the processing unit. The storage module may be configured to support storage of program code, data, and the like. The communication module may be configured to support communication between the first network element, the terminal device, or the server and another device.

The processing module may be a processor or a controller, and can implement or execute various example logical blocks, modules, and circuits described with reference to content disclosed in this application. The processor may alternatively be a combination for implementing a computing function, for example, a combination including one or more microprocessors or a combination of a digital signal processor (digital signal processor, DSP) and a microprocessor. The storage module may be a memory. The communication module may be specifically a device, for example, a radio frequency circuit, a Bluetooth chip, or a Wi-Fi chip, that interacts with another electronic device.

For example, FIG. 7 is a block diagram of a communication apparatus 700 according to an embodiment of this application. The communication apparatus 700 may correspond to the RPF described in the method 400 to the method 600, or may be a chip or a component used in the RPF. In addition, modules or units in the communication apparatus 700 are respectively configured to perform actions or processing processes performed by the RPF in the method 400 to the method 600.

As shown in FIG. 7, the communication apparatus 700 includes a processing module 710 and an interface module 720. The interface module 720 is configured to perform specific signal receiving and sending under driving of the processing module 710.

The interface module 720 is configured to receive third indication information, where the third indication information indicates the communication apparatus to send data in a first semantic library to a first device, the third indication information includes at least one of a task flow ID or an ID of the first semantic library, a first network element is deployed on a core network side or an access network side, and the communication apparatus stores one or more semantic libraries.

The processing module 710 is configured to determine the data in the first semantic library based on the third indication information, where the data in the first semantic library includes at least one of a semantic source encoding model, a channel encoding model, data or a model that is helpful to a source encoding model, or data or a model that is helpful to a channel encoding model.

The interface module 720 is further configured to send the data in the first semantic library to the first device.

The communication apparatus provided in this embodiment of this application is deployed in a core network or an access network, and stores one or more semantic libraries. Any device (for example, a terminal device or a server) accessing the core network or the access network can obtain the semantic library from the communication apparatus. In this way, the semantic library is public. This improves efficiency of obtaining the semantic library by the terminal device, and is user-friendly. Based on the semantic library provided by the communication apparatus, the semantic processing can be implemented when a computing resource, a storage resource, or the like of the terminal device is limited, thereby improving efficiency of performing semantic information extraction, semantic encoding, and channel encoding by the terminal device, and reducing requirements on a processing capability of the terminal device.

In some possible implementations, the interface module 720 is further configured to receive first indication information from the first device, where the first indication information indicates a first network element to assist in performing first semantic processing, and the first indication information includes at least one of to-be-transmitted semantic data, a task cooperation instruction, or a task requirement; and the processing module 710 is further configured to assist in, based on the first indication information, performing the first semantic processing. The interface module 720 is further configured to send the processing result to the first device. In this implementation, the communication apparatus may assist the terminal device or the server in performing processes such as semantic information extraction and semantic encoding, or semantic decoding and semantic recovery, thereby improving efficiency of performing semantic processing (for example, including semantic information extraction, semantic encoding, and channel encoding, or channel decoding, semantic decoding, and semantic information recovery) processes by the terminal device or the server.

In some possible implementations, the processing module 710 is further configured to determine a second semantic library corresponding to the first semantic library, where data in the second semantic library includes at least one of a semantic source decoding model, a channel decoding model, data or a model that is helpful to a source decoding model, data or a model that is helpful to a channel decoding model, or the like; and the interface module 720 is further configured to send the data in the second semantic library to a second device. In this implementation, the communication apparatus may determine the data in the second semantic library corresponding to the first semantic library, and send the data to the second device. This improves efficiency of obtaining the semantic library by the second device, and is user-friendly. Based on the semantic library provided by the communication apparatus, the semantic processing can be implemented when a computing resource, a storage resource, or the like of the second device is limited, thereby improving efficiency of performing channel decoding, and semantic information decoding and recovery by the second device, and reducing requirements on a processing capability of the second device. In addition, it is ensured that the communication apparatus can determine correct and available semantic library data, thereby ensuring precision and validity of the data in the semantic library.

In some possible implementations, the interface module 720 is further configured to: receive second indication information from the second device, where the second indication information indicates a first network element to assist in performing second semantic processing, and the second indication information includes at least one of a received semantic data stream, a task cooperation instruction, or a task requirement; and the first network element assists in, based on the second indication information, performing the second semantic processing, and sends a processing result to the second device. In this implementation, the communication apparatus may assist the second device in performing the semantic processing (for example, including channel decoding, semantic decoding, and semantic information recovery), to improve efficiency of performing a semantic processing process by the second device, and reduce a requirement on a processing capability of the second device.

In some possible implementations, the interface module 720 is further configured to send information about the first semantic library to a second network element, where the first device and the communication apparatus belong to a same network, a second device and the second network element belong to a same network, the communication apparatus and the second network element are in different networks, the second network element is deployed on a core network side or an access network side, the second network element stores one or more semantic libraries, and the information about the first semantic library includes at least one of the ID of the first semantic library, the task flow ID, or a semantic source encoding model, a channel encoding model, or a data model that is used by the first device. In this implementation, the information about the first semantic library is sent to the second network element, for the second network element and the communication apparatus to perform semantic library alignment. In this way, the second network element can determine the data in the second semantic library corresponding to the first semantic library and send the data to the second device. This ensures that the second network element can determine correct and available semantic library data, thereby ensuring precision and validity of the data in the semantic library.

In some possible implementations, the first semantic processing includes: performing semantic information extraction, semantic encoding, and channel encoding on the to-be-transmitted semantic data by using the data in the first semantic library.

In some possible implementations, the second semantic processing includes: performing channel decoding, semantic information decoding, and semantic recovery on the received semantic data stream by using the data in the second semantic library.

It should be understood that, for a specific process in which the units in the communication apparatus 700 perform the foregoing corresponding steps, refer to the foregoing descriptions related to the RPF with reference to the related embodiments in the method 400 to the method 600. For brevity, details are not described herein again.

Optionally, the interface module 720 may include a receiving unit (module) and a sending unit (module), configured to perform steps of receiving information and sending information by the RPF in embodiments of the method 400 to the method 600.

Further, the communication apparatus 700 may further include a storage unit. The interface module 720 may be a transceiver, an input/output interface, or an interface circuit. The storage unit is configured to store instructions executed by the interface module 720 and the processing module 710. The interface module 720, the processing module 710, and the storage unit are coupled to each other. The storage unit stores the instructions. The processing module 710 is configured to execute the instructions stored in the storage unit. The interface module 720 is configured to perform specific signal receiving and sending under driving of the processing module 710.

It should be understood that the interface module 720 may be the transceiver, the input/output interface, or the interface circuit. The storage unit may be a memory. The processing module 710 may be implemented by a processor. As shown in FIG. 8, a communication apparatus 800 may include a processor 810, a memory 820, and a transceiver 830.

The communication apparatus 700 shown in FIG. 7 or the communication apparatus 800 shown in FIG. 8 can implement the steps performed by the RPF in embodiments of the method 400 to the method 600. For similar descriptions, refer to the descriptions in the foregoing corresponding methods. To avoid repetition, details are not described herein again.

It should be further understood that the communication apparatus 700 shown in FIG. 7 or the communication apparatus 800 shown in FIG. 8 may be a core network element or an access network element. Alternatively, the core network element or the access network element may include the communication apparatus 700 shown in FIG. 7 or the communication apparatus 800 shown in FIG. 8.

It should be further understood that the core network element or the access network element in this application may be a chip, a chip system, or a processor that supports the network element in implementing the method, or may be a logical node, a logical module, or software that can implement all or some functions of the network element.

It should be further understood that division into the units in the apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. The processing element herein may also be referred to as a processor, and may be an integrated circuit having a signal processing capability. In an implementation process, steps in the foregoing methods or the foregoing units may be implemented by using a hardware integrated logic circuit in a processor element, or may be implemented in the form of software invoked by the processing element.

In an example, a unit in any one of the foregoing apparatuses may be one or more integrated circuits configured to implement the foregoing methods, for example, one or more application-specific integrated circuits (application-specific integrated circuit, ASIC), one or more digital signal processors (digital signal processor, DSP), one or more field programmable gate arrays (field programmable gate array, FPGA), or a combination of at least two of these integrated circuit forms. For another example, when the unit in the apparatus is implemented in a form of scheduling a program by the processing element, the processing element may be a general-purpose processor, for example, a central processing unit (central processing unit, CPU) or another processor that may invoke the program. For still another example, the units may be integrated and implemented in a form of a system-on-a-chip (system-on-a-chip, SoC).

It should be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It should be further understood that the memory in embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions or computer programs. When the computer instructions or the computer programs are loaded and executed on a computer, all or some of the procedures or functions in embodiments of this application are produced. The computer may be a general-purpose computer, a dedicated computer, a computer network, or another programmable apparatus. The computer instructions may be stored in a computer-readable storage medium or may be transmitted from one computer-readable storage medium to another computer-readable storage medium. For example, the computer instructions may be transmitted from a website, computer, server, or data center to another website, computer, server, or data center in a wired (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

An embodiment of this application further provides a communication system. The communication system includes the foregoing terminal device (for example, the first terminal device and/or the second terminal device) and the foregoing first network element (for example, an RPF); or the communication system includes the foregoing server and the foregoing first network element (for example, an RPF).

Optionally, the communication system further includes a core network element (for example, an AMF or a UPF).

An embodiment of this application further provides a computer-readable medium, configured to store computer program code. The computer program includes instructions used to perform the semantic information transmission methods in embodiments of this application in the method 400 to the method 600. The readable medium may be a read-only memory (read-only memory, ROM) or a random access memory (random access memory, RAM). This is not limited in embodiments of this application.

This application further provides a computer program product. The computer program product includes instructions. When the instructions are executed, each device (for example, including the first network element (for example, an RPF), the terminal device, or the server) is caused to perform an operation corresponding to the foregoing methods.

An embodiment of this application further provides a chip system. As shown in FIG. 9, the chip system includes at least one processor 901 and at least one interface circuit 902. The processor 901 and the interface circuit 902 may be connected to each other through a line. For example, the interface circuit 902 may be configured to receive a signal from another apparatus (for example, a memory of the foregoing terminal devices). For another example, the interface circuit 902 may be configured to send a signal to another apparatus (for example, the processor 901). For example, the interface circuit 902 may read instructions stored in the memory, and send the instructions to the processor 901. When the instructions are executed by the processor 901, the chip may be caused to perform steps performed by the RPF in the foregoing embodiments. It is clear that, the chip system may further include another discrete device. This is not specifically limited in embodiments of this application.

An embodiment of this application further provides an apparatus. The apparatus is included in a core network element or an access network element. The apparatus has a function of implementing behavior of the RPF in any one of the foregoing embodiments. The function may be implemented by hardware, or may be implemented by hardware executing corresponding software. The hardware or the software includes at least one module or unit corresponding to the foregoing function.

An embodiment of this application further provides a chip. The chip includes a processing unit and a communication unit. The processing unit may be, for example, a processor, and the communication unit may be, for example, an input/output interface, a pin, a circuit, or the like. The processing unit may execute computer instructions, so that the chip in a communication apparatus performs any semantic information transmission method provided in embodiments of this application above.

Optionally, any communication apparatus provided in embodiments of this application above may include the chip.

Optionally, the computer instructions are stored in a storage unit.

Optionally, the storage unit is a storage unit in the chip, for example, a register or a cache. Alternatively, the storage unit may be a storage unit that is in a terminal and that is located outside the chip, for example, a ROM or another type of static storage device that can store static information and instructions, or a RAM. The processor described anywhere above may be a CPU, a microprocessor, an ASIC, or one or more integrated circuits configured to control program execution of the foregoing semantic information transmission method. The processing unit and the storage unit may be decoupled, are disposed on different physical devices respectively, and are connected in a wired or wireless manner to implement respective functions of the processing unit and the storage unit, to support the chip in implementing various functions in the foregoing embodiments. Alternatively, the processing unit and the memory may be coupled to a same device.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

In this application, names may be assigned to various objects such as messages/information/devices/network elements/systems/apparatuses/actions/operations/procedures/concepts. It can be understood that the specific names do not constitute a limitation on the related objects. The assigned names may vary with factors such as scenarios, contexts, or usage habits. Understanding of technical meanings of technical terms in this application should be determined mainly based on functions and technical effects embodied/performed by the technical terms in the technical solutions.

A person of ordinary skill in the art may be aware that all or some of the methods in embodiments of this application may be implemented by using software, hardware, firmware, or any combination thereof. When software is used to implement the methods, all or some of the methods may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, or another programmable apparatus. The computer programs or the instructions may be stored in a computer-readable storage medium, or transmission of the computer programs or the instructions may be performed by using the computer-readable storage medium. The computer-readable storage medium may be any usable medium accessible by the computer, or a data storage device, for example, a server, integrating one or more usable media.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The storage medium includes a USB flash drive, a removable hard disk, a read-only memory (read-only memory, ROM), or a random access memory.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A semantic information transmission method, wherein the method comprises:
sending, by a first network element, data in a first semantic library to a first device, wherein the first network element is deployed on a core network side or an access network side, the first network element stores one or more semantic libraries, and the data in the first semantic library comprises at least one of a semantic source encoding model, a channel encoding model, data or a model that is helpful to a source encoding model, or data or a model that is helpful to a channel encoding model;
performing, by the first device, first semantic processing on to-be-transmitted semantic data by using the data in the first semantic library, to obtain a semantic data stream; and
sending, by the first device, the semantic data stream to a second device.

2. The method according to claim 1, wherein before sending, by the first device, the semantic data stream to the second device, the method further comprises:
sending, by the first device, first indication information to the first network element, wherein the first indication information indicates the first network element to assist in performing the first semantic processing, and the first indication information comprises at least one of the to-be-transmitted semantic data, a task cooperation instruction, or a task requirement;
assisting in, by the first network element based on the first indication information, performing the first semantic processing, and sending a processing result to the first device; and
obtaining, by the first device, the semantic data stream based on the processing result and a processing result of performing the first semantic processing by the first device.

3. The method according to claim 1 or 2, wherein the method further comprises:
determining, by the first network element, data in a second semantic library corresponding to the first semantic library, wherein the data in the second semantic library comprises at least one of a semantic source decoding model, a channel decoding model, data or a model that is helpful to a source decoding model, or data or a model that is helpful to a channel decoding model;
sending, by the first network element, the data in the second semantic library to the second device; and
performing, by the second device, second semantic processing on the received semantic data stream by using the data in the second semantic library, to obtain the to-be-transmitted semantic data, wherein the second semantic processing comprises: performing channel decoding, semantic information decoding, and semantic recovery on the semantic data stream by using the data in the second semantic library.

4. The method according to claim 3, wherein the method further comprises:
sending, by the second device, second indication information to the first network element, wherein the second indication information indicates the first network element to assist in performing the second semantic processing, and the second indication information comprises at least one of the received semantic data stream, a task cooperation instruction, or a task requirement;
assisting in, by the first network element based on the second indication information, performing the second semantic processing, and sending a processing result to the second device; and
obtaining, by the second device, the to-be-transmitted semantic data based on the processing result and a processing result of performing the second semantic processing by the second device.

5. The method according to any one of claims 1 to 4, wherein before sending, by the first network element, the data in the first semantic library to the first device, the method further comprises:
sending, by the first device, a semantic resource request to a second network element, wherein the semantic resource request is used to request a semantic library resource, and the semantic resource request comprises: at least one of a type of the to-be-transmitted semantic data, a required resource, or a semantic library request;
sending, by the second network element, third indication information to the first network element based on the semantic resource request, wherein the third indication information indicates the first network element to send the data in the first semantic library to the first device, the third indication information comprises at least one of a task flow ID or an ID of the first semantic library, and the task flow ID or the ID of the first semantic library is determined based on the type of the to-be-transmitted semantic data; and
determining, by the first network element, the data in the first semantic library based on the third indication information.

6. The method according to claim 5, wherein the second network element comprises an AMF.

7. The method according to claim 1 or 2, wherein the method further comprises:
sending, by the first network element, information about the first semantic library to a third network element, wherein the first device and the first network element belong to a same network, the second device and the third network element belong to a same network, the first network element and the third network element are in different networks, the third network element is deployed on a core network side or an access network side, the third network element stores one or more semantic libraries, and the information about the first semantic library comprises at least one of an ID of the first semantic library, a task flow ID, or a semantic source encoding model, a channel encoding model, or a data model that is used by the first device;
determining, by the third network element based on the information about the first semantic library, data in a second semantic library corresponding to the first semantic library, wherein the data in the second semantic library comprises at least one of a semantic source decoding model, a channel decoding model, data or a model that is helpful to a source decoding model, or data or a model that is helpful to a channel decoding model;
sending, by the third network element, the data in the second semantic library to the second device; and
performing, by the second device, second semantic processing on the received semantic data stream by using the data in the second semantic library, to obtain the to-be-transmitted semantic data.

8. The method according to any one of claims 1 to 7, wherein the first semantic processing comprises: performing semantic information extraction, semantic encoding, and channel encoding on the to-be-transmitted semantic data by using the data in the first semantic library.

9. The method according to claim 3 or 4, wherein the second semantic processing comprises: performing channel decoding, semantic information decoding, and semantic recovery on the received semantic data stream by using the data in the second semantic library.

10. The method according to any one of claims 1 to 9, wherein the first device comprises at least one of a terminal device or a server.

11. A semantic information transmission method, wherein the method comprises:
receiving, by a first network element, third indication information, wherein the third indication information indicates the first network element to send data in a first semantic library to a first device, the third indication information comprises at least one of a task flow ID or an ID of the first semantic library, the first network element is deployed on a core network side or an access network side, and the first network element stores one or more semantic libraries;
determining, by the first network element, the data in the first semantic library based on the third indication information, wherein the data in the first semantic library comprises at least one of a semantic source encoding model, a channel encoding model, data or a model that is helpful to a source encoding model, or data or a model that is helpful to a channel encoding model; and
sending, by the first network element, the data in the first semantic library to the first device.

12. The method according to claim 11, wherein the method further comprises:
receiving, by the first network element, first indication information from the first device, wherein the first indication information indicates the first network element to assist in performing first semantic processing, and the first indication information comprises at least one of to-be-transmitted semantic data, a task cooperation instruction, or a task requirement; and
assisting in, by the first network element based on the first indication information, performing the first semantic processing, and sending a processing result to the first device.

13. The method according to claim 11 or 12, wherein the method further comprises:
determining, by the first network element, data in a second semantic library corresponding to the first semantic library, wherein the data in the second semantic library comprises at least one of a semantic source decoding model, a channel decoding model, data or a model that is helpful to a source decoding model, or data or a model that is helpful to a channel decoding model; and
sending, by the first network element, the data in the second semantic library to a second device.

14. The method according to claim 13, wherein the method further comprises:
receiving, by the first network element, second indication information from the second device, wherein the second indication information indicates the first network element to assist in performing second semantic processing, and the second indication information comprises at least one of a received semantic data stream, a task cooperation instruction, or a task requirement; and
assisting in, by the first network element based on the second indication information, performing the second semantic processing, and sending a processing result to the second device.

15. The method according to claim 11 or 12, wherein the method further comprises:
sending, by the first network element, information about the first semantic library to a third network element, wherein the first device and the first network element belong to a same network, a second device and the third network element belong to a same network, the first network element and the third network element are in different networks, the third network element is deployed on a core network side or an access network side, the third network element stores one or more semantic libraries, and the information about the first semantic library comprises at least one of the ID of the first semantic library, the task flow ID, or a semantic source encoding model, a channel encoding model, or a data model that is used by the first device.

16. The method according to claim 12, wherein the first semantic processing comprises: performing semantic information extraction, semantic encoding, and channel encoding on the to-be-transmitted semantic data by using the data in the first semantic library.

17. The method according to claim 14, wherein the second semantic processing comprises: performing channel decoding, semantic information decoding, and semantic recovery on the received semantic data stream by using the data in the second semantic library.

18. A communication apparatus, comprising units configured to perform the steps of the method according to any one of claims 11 to 17.

19. A communication apparatus, comprising a processor, wherein the processor is coupled to a memory, the memory is configured to store a program or instructions, and when the program or the instructions are executed by the processor, the apparatus is caused to perform the method according to any one of claims 11 to 17.

20. A computer-readable storage medium, wherein the computer-readable storage medium stores a computer program, the computer program comprises program instructions, and when the program instructions are executed by a processor, the processor is caused to perform the method according to any one of claims 11 to 17.

21. A chip, comprising a processor, configured to invoke a computer program from a memory and run the computer program, to cause a communication device in which the chip is installed to perform the method according to any one of claims 11 to 17.
